# EUROPÄISCHE PATENTSCHRIFT

(11) **EP 0 995 673 B1**
(45) Veröffentlichungstag und Bekanntmachung des Hinweises auf die Patenterteilung: **22.03.2006**
(21) Anmeldenummer: 99118348.4
(22) Anmeldetag: 16.09.1999
(51) Int. Cl.: B64C 1/12

(54) **Schalenbauteil für ein Flugzeug und Verfahren zur Herstellung**
Shell construction for an aircraft and method for the production thereof
Construction en coquille pour un avion et son procédé de production

(30) Priorität: 25.09.1998 DE 19844035
(43) Veröffentlichungstag der Anmeldung: 26.04.2000
(73) Patentinhaber: Airbus Deutschland GmbH, 21129 Hamburg (DE)
(72) Erfinder: Brinck, Peter, 21680 Stade (DE); Müller, Wilfried, 22415 Hamburg (DE); Sanmann, Klaus P., 22459 Hamburg (DE); Spitzner, Jörg, 22549 Hamburg (DE)
(74) Vertreter: Hansmann, Dierk

(56) Entgegenhaltungen:
- EP-A- 0 244 670
- DE-C- 19 639 667
- ES-A- 2 131 479
- US-A- 2 121 670
- US-A- 5 242 523
- ERITT J: "LASERSTRAHLSCHWEISSEN HOCHFESTER ALUMINIUMLEGIERUNGEN IM FLUGZEUGBAU" VDI Z, VDI VERLAG GMBH. DUSSELDORF, DE, Bd. 137, Nr. 6, 1. Juni 1995 (1995-06-01), Seiten 34-38, XP000508365 ISSN: 0042-1766

## Beschreibung

Die Erfindung betrifft ein Schalenbauteil für ein Flugzeug, im wesentlichen bestehend aus mindestens einem Hautblech, mehrere in Flugzeuglängsrichtung verlaufende Stringer und quer zur Flugzeuglängsrichtung verlaufende Spante, wobei das Hautfeld im Bereich der Anschlußstellen zu den Stringern mit einem Schweißzusatzwerkstoff versehen ist und die Stringer auf das Hautblech in diesem Bereich angeschweißt sind.

Im Flugzeugbau ist es derzeit üblich, Schalenbauteile für die Rumpfstruktur, die im wesentlichen aus Rumpfhaut-Stringer-Verbindungen bestehen, hauptsächlich mit dem Fertigungsverfahren Nieten oder Kleben herzustellen. Für den weiteren Fertigungsschritt - das Montieren der Spante - werden an die Stringer Winkelelemente, sogenannte Clips, angenietet. Damit ist für die Herstellung von Strukturbauteilen als Haut-Stringer-Spant-Verbindung ein hoher Material- und Montageaufwand notwendig. Im Zuge der weiteren Flugzeugentwicklung ist es von hoher Bedeutung, eine Gewichtreduzierung an den Flugzeugen zu erreichen. Daher ist es notwendig, vom traditionellen Fügeverfahren des Nietens zu verbesserten Fügeverfahren zu gelangen, die solche Gewichtseinsparungen realisieren.

In der DE 196 39 667 ist ein Verfahren zum Schweißen von Profilen auf großformatigen Aluminium-Strukturbauteilen mittels Laserstrahlen beschrieben. Solche Al-Strukturbauteile in Haut-Stringer-Bauweise können für die Herstellung einer Flugzeugrumpfschale verwendet werden.

Ausgehend von diesem Stand der Technik ist es Aufgabe der Erfindung, ein gattungsgemäßes Schalenbauteil für ein Flugzeug so auszubilden, daß es mit dem Fügeverfahren Schweißen hergestellt werden kann sowie ein Herstellungsverfahren für das Schalenbauteil anzugeben.

Diese Aufgabe wird mit den im Patentanspruch 1, 11 oder 26 genannten Maßnahmen gelöst.
Verfahren zur Herstellung eines Schalenbauteils gemäß der Patentansprüche 1, 11 bzw. 26 sind in den Ansprüchen 6, 21 bzw. 31 angegeben.

Dabei ist insbesondere von Vorteil, daß ein Schalenbauteil für einen Flugzeugrumpf schweißgerecht ausgebildet ist und mit den angegebenen Maßnahmen der Aufwand an Fertigungszeit und Material reduziert werden kann.

Weiterbildungen und vorteilhafte Ausgestaltungen sind in den abhängigen Patentansprüchen angegeben.

In der Zeichnung sind Ausführungsbeispiele der Erfindung dargestellt. Sie werden nachstehend anhand der Figuren 1 bis 13 näher beschrieben. In den Figuren sind gleiche Bauteile mit gleichen Bezugszeichen versehen.

Es zeigt
- Fig. 1: ein Schalenbauteil für einen Flugzeugrumpf in einer ersten Ausführungsform,
- Fig. 2: eine Rumpfhaut-Stringer-Verbindung der ersten Ausführungsform im Querschnitt,
- Fig. 3: ein Spant für das Schalenbauteil,
- Fig. 4: eine Stringer-Spantfuß-Verbindung in der Seitenansicht,
- Fig. 5: das Schalenbauteil gemäß der ersten Ausführungsform in einer Explosionsdarstellung,
- Fig. 6: ein Schalenbauteil in einer zweiten Ausführungsform,
- Fig. 7: eine Rumpfhaut-Stringersteg-Verbindung der zweiten Ausführungsform des Schalenbauteils im Querschnitt,
- Fig. 8: ein Stringer-Spant-Gitter der zweiten Ausführungsform des Schalenbauteils,
- Fig. 9: eine Rumpfhaut-Stringersteg-Stringergurt-Verbindung der zweiten Ausführungsform des Schalenbauteils im Querschnitt,
- Fig. 10: die Rumpfhaut-Spantgurt-Spantfuß-Verbindung der zweiten Ausführungsform des Schalenbauteils im Querschnitt,
- Fig. 11: das Schalenbauteil gemäß der zweiten Ausführungsform in einer Explosionsdarstellung,
- Fig. 12: ein Schalenbauteil in einer dritten Ausführungsform und
- Fig. 13: die Rumpfhaut-Spantgurt-Spantfuß-Verbindung der dritten Ausführungsform des Schalenbauteils im Querschnitt.

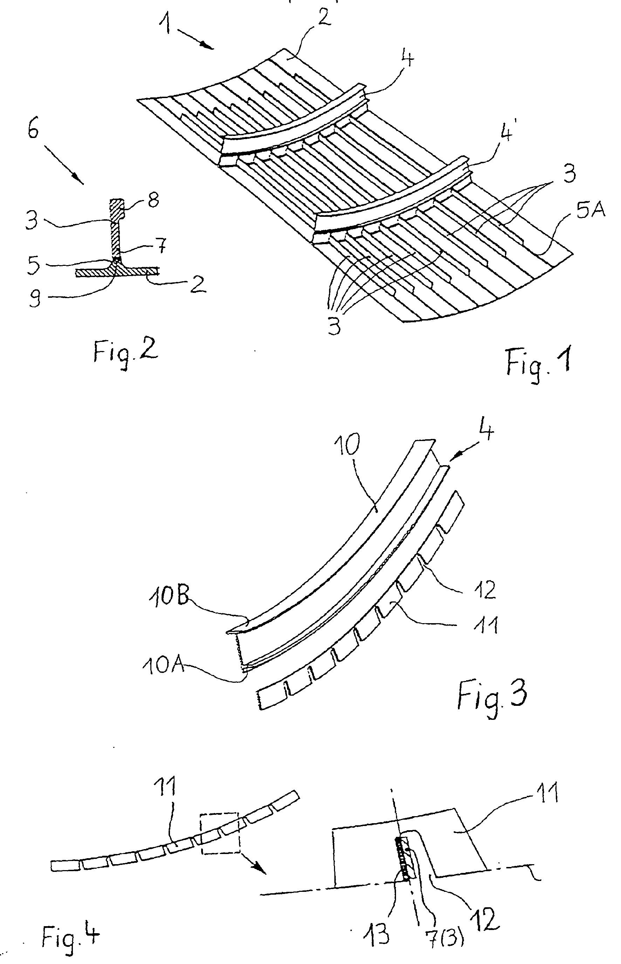

In Fig. 1 ist ein Schalenbauteil 1 für einen Flugzeugrumpf ersichtlich. Ein Flugzeugrumpf besteht im wesentlichen aus mehreren Sektionen, die sich wiederum aus mehreren vorgefertigten Schalenbauteilen zusammensetzen. Das vorgefertigte Schalenbauteil 1 in einer ersten Ausführungsform besteht im wesentlichen aus einem vorgeformten Hautblech 2, welches zur Verstärkung mit in Flugzeuglängsrichtung verlaufenden Stringern 3 versehen ist. In Flugzeugquerrichtung sind in Abständen Spante 4 und 4' angeordnet. Die Spante 4 und 4' dienen im Flugzeugrumpf unter anderem zur Lasteinleitung aus den Leitwerken. In der gezeigten Ausführungsform sind sowohl die Stringer 3 als auch die Spantanschlüsse 4 mit dem Hautblech 2 verschweißt. Das Hautblech 2 ist dafür einseitig plattiert, mit einer Plattierschicht aus Schweißzusatzmaterial. Das Hautblech muß aus einem schweißgeeigneten Strukturwerkstoff bestehen, wie beispielsweise eine Al-Mg-Si-Legierung oder eine Al-Li-Legierung. Um der späteren Kontur der Schale zu entsprechen, wird das Blech tiefgezogen. Die Blechseite mit dem Schweißzusatzmaterial, der späteren Hautinnenseite, muß auf dem Tiefziehklotz aufliegen. Dann findet eine Verformung in Spantrichtung sowie bei sphärischen Bauteilen auch in Stringerrichtung statt. Nur in den Anschlußbereichen der Stringerstege 3 und den Spantanschlüssen 4 und 4' wird das Schweißzusatzmaterial benötigt, sodaß das Restmaterial durch chemisches Abtragen entfernt werden kann. Die so entstandenen Sockel 5 aus Schweißzusatzmaterial (siehe Fig. 2) bilden auf dem Hautblech 2 ein gitterartiges Gebilde 5A. Dieses Depot an Schweißzusatzmaterial ist für eine einwandfreie Schweißnahtausbildung ohne Rissbildung notwendig. Als Schweißzusatzmaterial wird beispielsweise AISi12 verwendet.
Es können aber auch andere bekannte Methoden zum Aufbringen des Schweißzusatzmaterials an die für das Schweißen vorgesehenen Stellen am Hautblech Anwendung finden. Eine Zuführung von Zusatzwerkstoff während des Schweißvorganges mittels einer Drahtvorrichtung ist eine solche. Auch eine Kombination von Schweißzusatzmaterial als Depot mit der Zuführung von Schweißzusatzmaterial als Draht ist eine weitere Möglichkeit.

Die weiteren Arbeitsschritte zur Herstellung der Haut-Stringer-Spant-Verbindung (Rumpfschale 1) werden im folgenden beschrieben.

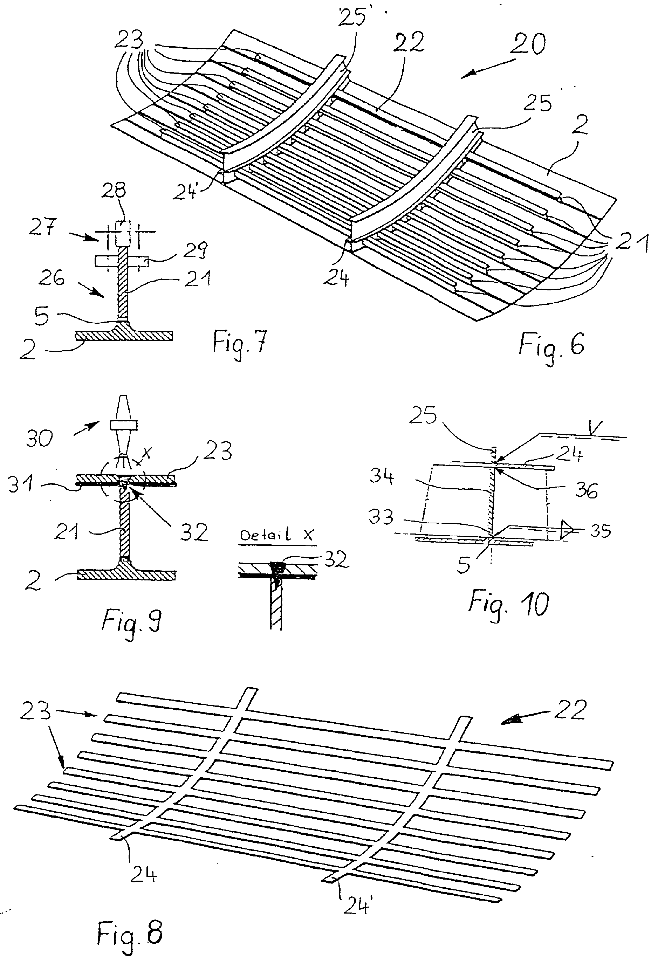

In Fig. 2 ist im Ausschnitt ein Querschnitt einer Hautbtech-Stringer-Verbindung 6 ersichtlich. Auf das Hautblech 2 werden im ersten Arbeitsschritt die längsverlaufenden Stringer 3 aufgeschweißt. Als Stringer 3 kommt vorzugsweise ein Strangpreßhalbzeug mit Hammerkopfprofil 8 zum Einsatz. Der Stringersteg 7 steht senkrecht auf dem Hautblech 2. Die Fügeebene 9 der Bauteile Hautblech 2 und Stringer 3 ist einerseits durch den Sockel 5 mit dem Schweißzusatzmaterial und andererseits durch die dem Hammerkopf 8 abgewandte Stirnfläche des Stringerstegs 7 gebildet. Für das Verschweißen vom Hautblech 2 und Stringersteg 7 ist der Einsatz eines CO₂-Lasers vorgesehen. Mittels einer hier nicht gezeigten Andrückvorrichtung (gezeigt ist eine Andrückvorrichtung 27 in Fig. 7) wird der Stringer 3 auf dem Hautblech 2 fixiert. Es wird vorzugsweise eine Doppelkehlnaht bzw. eine Doppel-HV-Naht als Fügeverbindung geschweißt.

In Fig. 3 ist ein Spant 4 als Einzelheit dargestellt. Der Spant 4 besteht aus Spantprofil 10 und Spantfuß 11. Um die Zugänglichkeit der Schweißverbindung zu realisieren ist diese Trennung in Spantprofil 10 und Spantfuß 11 notwendig. Das Spantprofil 10 weist einen Außengurt 10A und einen Innengurt 10B auf. Der Innengurt 10B ist hier als T-Profil ausgebildet. Möglich wäre aber auch eine L-förmige Profilform. Am Spantfuß 11 sind Ausschnitte 12 vorgesehen, die für die Stringer 3 des stringerverstärkten Hautbleches 2 als Durchgang dienen.

In Fig. 4 ist der Spantfuß 11 als Fügeverbindung mit dem Stringer 3 ersichtlich. Der Spantfuß 11 wird sowohl mit der stringerverstärkten Rumpfhaut 2 und der dem Hammerkopf 8 abgewandten Seite des Stringersteges 7 verschweißt. Eine Schweißnaht 13 als Fügeverbindung ist in Fig. 4 dargestellt. Dabei ist zu beachten, daß für den Zuschnitt der Ausschnitte 12 am Spantfuß 11 die Krümmung der Schale zu berücksichtigen ist. Die Anschlußflächen zwischen Spantfuß 11 und Stringersteg 7, die mittels der Schweißnaht 13 miteinander verbunden werden, müssen parallel liegen.
Es ist aber auch möglich, die Ausschnitte 12 beispielsweise so trapezförmig zu gestalten, daß zwischen Spantfuß 11 und Stringersteg 7 keine Berührungspunkte auftreten. In einem solchen Fall wäre der Spantfuß 11 nur mit der Rumpfhaut 2 verschweißt, wobei ein zusätzlicher Stringerstützwinkel vorsehbar wäre.

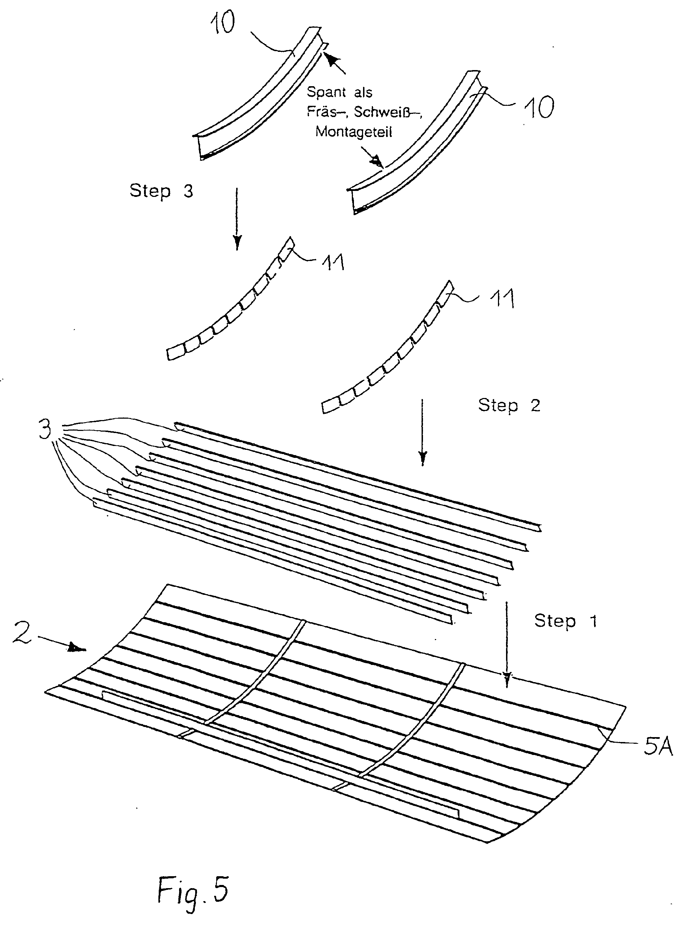

In Fig. 5 ist das Schalenbauteil 1 der ersten Ausführungsform in einer Explosionsdarstellung gezeigt. Anhand dieser Darstellung kann die Montagereihenfolge zur Herstellung des Schalenbauteils 1 erläutert werden.
Im ersten Schritt wird die Rumpfhaut 2 mit einem Gitter 5A aus Schweißzusatzmaterial versehen. Näheres dazu ist bereits in der Erläuterung zur Fig. 1 beschrieben. Die Stringer 3 werden auf das vorgeformte Rumpfhautblech 2 geschweißt, wobei die längsverlaufenden Sockel 5 mit Schweißzusatzmaterial vom Gitter 5A die Anschlußflächen dieser Fügeverbindung bilden. Nachdem die Schweißverbindung zwischen Rumpfhaut 2 und Stringer 3 hergestellt wurde und damit die Hautblech-Stringer-Verbindung 6 entstanden ist (siehe Fig. 2), werden die Spantfüße 11 sowohl mit der Rumpfhaut 2 als auch mit dem Stringersteg 7 verschweißt, wie bereits näher in der Fig. 4 erläutert wurde. Als nächster Schritt werden die Spantprofile 10 mit den bereits am stringerverstärkten Hautblech 2 angebrachten Spantfüßen 11 verbunden. Diese separat vorgefertigten Spantprofile 11 sind vorzugsweise auch mittels einer einseitig bzw. beidseitig ausgeführten Stumpfnahtschweißverbindung an den Spantfüßen 11 angeordnet. Aus Stabilitätsgründen ist am Spantprofil 10 der in Spantrichtung durchlaufende Außengurt 10A angeordnet. Das Spantprofil 10 kann mit unterschiedlichen Verfahren hergestellt werden. So ist eine Möglichkeit die Fertigung aus streckgezogenem Sprangpreßprofil als Halbzeug oder die Fertigung aus geschweißten oder genieteten Teilen in Differentialbauweise.

In Fig. 6 ist ein fertig montiertes Schalenbauteil 20 für einen Flugzeugrumpf in einer zweiten Ausführungsform ersichtlich. Es besteht im wesentlichen aus einem vorgeformten Hautblech 2, auf die längsverlaufende Stringerstege 21 aufgeschweißt sind. Die Stringerstege 21 müssen in Längsrichtung der Kontur des Hautbleches 2 entsprechen, um einen minimalen Abstand zwischen den Anschlußflächen von Hautblech 2 und Stringersteg 21 einzuhalten. Dafür können die Stringerstege 21 konturgenau zugeschnitten werden ohne eine nachfolgende Weiterbehandlung. Alternativ dazu können die Stringerstege gerade zugeschnitten werden und anschließend in Stringerrichtung streckgezogen werden, um eine der Rumpfhaut 2 entsprechende Kontur zu erhalten. Auf die Stringerstege 21 wird ein Stringer-Spant-Gitter 22 aufgeschweißt. Das Stringer-Spant-Gitter 22 ist gebildet aus Stringergurten 23 und Spantgurten 24 und 24'. Spantelemente 25 und 25' sind in Querrichtung des Schalenbauteils 20 an den Spantgurten 24 angeordnet.
Die einzelnen Arbeitsschritte zur Herstellung des Schalenbauteils 20 werden im folgenden näher beschrieben.

In Fig. 7 ist eine Rumpfhaut-Stringersteg-Verbindung 26 gezeigt. Auf der Rumpfhaut 2 stehen senkrecht die Stringerstege 21. Für eine solche Verbindung 26 ist - wie schon in den Fign. 1 und 2 beschrieben - ein Sockel 5 aus Schweißzusatzwerkstoff auf der Rumpfhaut 2 an der entsprechenden Anschlußstelle zum Stringersteg 21 vorgesehen. Mittels einer Andrückvorrichtung 27, die eine Andrückrolle 28 und ein Rollenpaar 29 zur Führung des Stringerstegs 21 aufweist, wird die für das Verschweißen notwendige Fixierung des Stringerstegs 21 auf der Rumpfhaut 2 erreicht. Das Verschweißen von Rumpfhaut 2 und Stringersteg 21 erfolgt mittels eines CO₂-Lasers, der mit einer hohen Fügegeschwindigkeit arbeitet. Als Schweißverbindung ist vorzugsweise eine Doppelkehlnaht bzw. Doppel-HV-Naht vorgesehen.

In Fig. 8 ist das Stringer-Spant-Gitter 22 als Einzelheit gezeigt. Mehrere längsverlaufende Stringergurte 23 und zwei querverlaufende Spantgurte 24 und 24' bilden das Gitter 22. Das Halbzeug für das Stringer-Spant-Gitter 22 ist - wie für die in Fig. 1 beschriebene Rumpfhaut 2 - ein Blech mit aufplattiertem Schweißzusatz. Das Blech wird bedarfsweise tiefgezogen, wobei die Blechseite mit dem Schweißzusatzmaterial nicht auf dem Tiefziehblock aufliegt. Es kann entsprechend der Geometrie des Schalenbauteils 20 in Spant- und in Stringerrichtung verformt werden. Die Kontur des Bleches für das Stringer-Spant-Gitter 22 muß der Kontur der Rumpfhaut 2 entsprechen, um eine parallel liegende Fügeebene zwischen Stringersteg 21 und Stringergurt 23 zu erreichen. Das Stringer-Spant-Gitter 22 wird aus dem Blech ausgeschnitten. Erfindungsgemäß kann mit diesem Stringer-Spant-Gitter 22 erreicht werden, daß Stringersteg 21 und Stringergurt 23 in einem Vorgang, ohne den Schweißvorgang durch kreuzende Bauteile zu behindern, miteinander verschweißt werden.

Eine solche Verbindung ist im Querschnitt in der Fig. 9 gezeigt. Mit dem LaserSchweißgerät 30 wird durch den Stringergurt 23 hindurch in den Stringersteg 21 hineingeschweißt. Schweißzusatzmaterial 31 ist auf der Unterseite des Stringergurtes 23 aufgebracht und steht an der Schweißstelle zur Verfügung. Als Schweißnaht 32 der Stringergurt-Stringersteg-Verbindung ist vorzugsweise eine I-Naht (vergleiche Detail X) vorzusehen.

In Fig. 10 ist die Verbindung zwischen Rumpfhaut 2, Spantgurt 24 und Spantelement 25 im Querschnitt ersichtlich. Das Spantelement 25 als separates, vorgefertigtes Bauteil besteht im wesentlichen aus einem Fußteil 33 und einem Spantsteg 34. Das Fußteil 33 ist auf den Sockel 5 aus Schweißzusatzmaterial senkrecht aufgesetzt und mittels einer Doppelkehlnaht bzw. Doppel-HV-Naht 35 mit der Rumpfhaut 2 verbunden. Für eine solche Verbindung ist ein Sockel 5 aus Schweißzusatzwerkstoff auf der Rumpfhaut 2 an der entsprechenden Anschlußstelle zum Fußteil 33 vorgesehen. Das Spantelement 25 ist darüber hinaus mit dem Spantgurt 24 verschweißt. Diese Verbindung zwischen Stirnfläche des Spantgurtes 24 und Spantsteg 34 ist vorzugsweise als HV-Schweißnaht 36 ausgebildet. Die Stirnfläche des Spantgurtes 24 ist in dieser Ausführungsform als Anschlag- und Anschlußfläche für das Spantelement 25 vorgesehen.

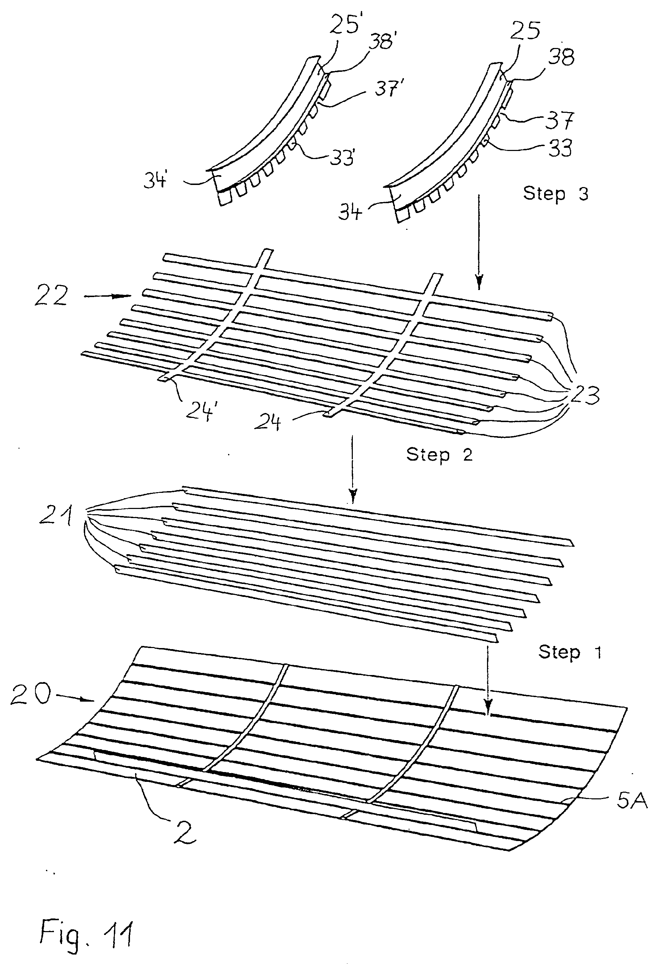

In Fig. 11 ist das Schalenbauteil 20 der zweiten Ausführungsform in einer Explosionsdarstellung gezeigt. Anhand dieser Darstellung kann die Montagereihenfolge zur Herstellung des Schalenbauteils 20 erläutert werden.
Dabei wird für die Vorbereitung der Rumpfhaut 2 und die Verbindung zwischen Rumpfhaut 2 und Stringerstege 21 wie bei der Fertigung der Schale 1 der ersten Ausführungform vorgegangen. Es wird dazu auf die obigen Ausführungen verwiesen.
Im ersten Schritt wird die Rumpfhaut 2 mit einem Gitter 5A aus Schweißzusatzmaterial versehen. Die Stringerstege 21 werden auf das vorgeformte Rumpfhautblech 2 geschweißt, wobei die längsverlaufenden Sockel 5 mit Schweißzusatzmaterial vom Gitter 5A die Anschlußflächen dieser Fügeverbindung bilden. Nachdem die Schweißverbindung zwischen Rumpfhaut 2 und Stringersteg 21 hergestellt wurde und damit die Hautblech-Stringer-Verbindung 26 entstanden ist (siehe Fig. 7), wird ein Stringer-Spant-Gitter 22 auf die Stringerstege 21 aufgeschweißt, wie bereits näher in der Fig. 9 erläutert wurde. Als nächsten Schritt werden die Spantelemente 25 und 25' an den vorgesehenen Stellen mit ihrem Fußteil 33, 33' am stringerverstärkten Hautblech 2 angeschweißt. Dazu muß das Fußteil 33 bzw. 33' mit Durchbrüchen 37 und 37' versehen sein, die für die Stringerstege 21 ausreichend Platz lassen. Die Stringerdurchbrüche 37 sind vorzugsweise trapezförmig ausgeführt. Die Spantelemente 25 und 25' mit ihren Spantstegen 34 und 34' werden weiterhin mit der entsprechenden Stirnfläche der Spantgurte 24 und 24' verschweißt. Zum Erreichen einer höheren Stabilität kann es notwendig sein, am Spantelement 25 bzw. 25' einen Versteifungsgurt 38 bzw. 38' vorzusehen.
Das separat vorgefertigte Spantelement 25 kann mit unterschiedlichen Verfahren hergestellt werden. So ist eine Möglichkeit die Fertigung aus einem streckgezogenen Sprangpreßprofil oder einem Frästeil als Halbzeug oder die Fertigung aus geschweißten oder genieteten Teilen in Differentialbauweise.

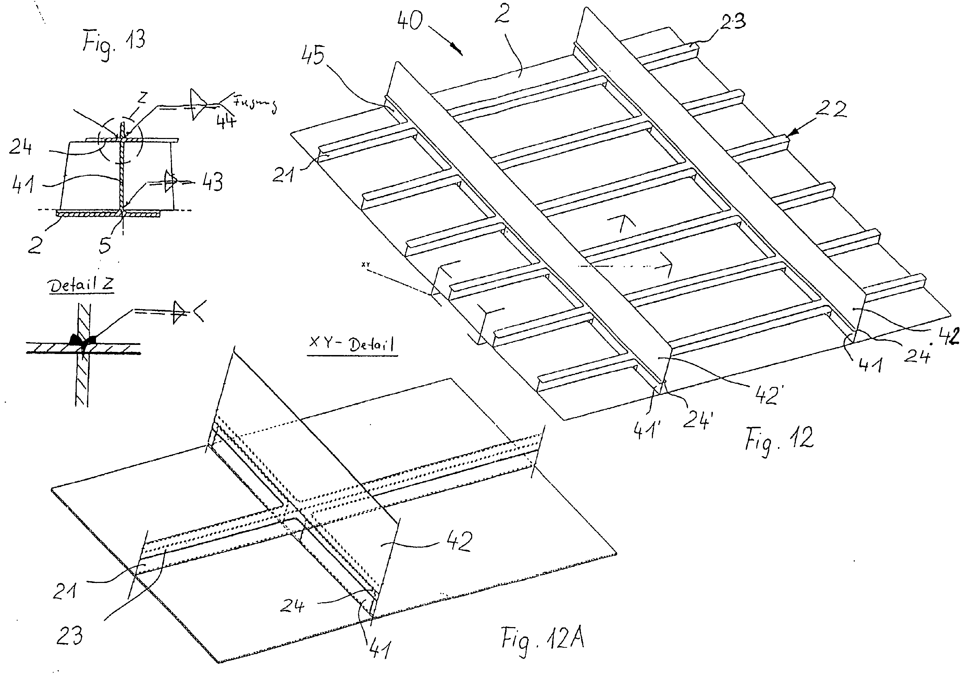

In der Fig. 12 ist ein Schalenbauteil 40 in einer dritten Ausführungsform gezeigt. Das Schalenbauteil 40 stellt eine Variante zur zweiten Ausführungsform dar, welche ebenfalls das Stringer-Spant-Gitter 22 mit dem Vorteil einer durchgehenden Schweißnaht nutzt. Damit können je Stringergurt 23 bzw. Spantgurt 24, 24' die Schweißnähte in einem Vorgang gefertigt werden, was die Fertigungszeit senkt.
Das gezeigte Schalenbauteil 40 ist in der Fig. 12 ohne eine sphärische Krümmung dargestellt. Möglich ist aber auch ein Krümmung in Stringerrichtung und/oder in Spantrichtung. Dies hängt davon ab, an welcher Stelle im Flugzeugrumpf das Schalenbauteil 40 eingesetzt werden soll. Es wird deshalb auf die Fign. 7 bis 9 und deren Beschreibung verwiesen, da die in diesen Figuren gezeigten Merkmale auch auf das Schalenbauteil 40 zutreffen. Neben den Stringerstegen 21 sind beim Schalenbauteil 40 Spantstege 41 und 41' vorgesehen, die ebenfalls auf die Rumpfhaut 2 aufgeschweißt werden müssen, bevor das Stringer-Spant-Gitter 22 angefügt werden kann. Stringerstege 21 und Spantstege 41, 41' bilden ein Steggitter 45. Da die Schweißebene bei den Stringerstegen 21 und den Spantstegen 41 und 41' zum Stringer-Spant-Gitter 22 gleich ist, kann das Durchschweißen durch Stringergurte 23 und Spantgurte 24 mit den gleichen Schweißvorrichtungen erfolgen (siehe auch Fig. 9).
Im Unterschied zur zweiten Ausführungsform des Schalenbauteils 20 ist beim Schalenbauteil 40 aber kein einteiliges Spantelement 25 bzw. 25' vorgesehen, welches am Spantgurt 24 seitlich angeschweißt wird. Vielmehr ist eine Trennung in Spantsteg 41, 41' und Spantkopf 42, 42' vorgenommen worden, die jeweils symmetrisch am Spantgurt 24 angeordnet sind. In der Fig. 12A ist ein vergrößerter Ausschnitt des Schalenbauteils 40 gezeigt. Dieser Ausschnitt läßt den Stringersteg 21, den Spantsteg 41 sowie den Stringergurt 23 und den Spantgurt 24 erkennen. Auf den Spantgurt 24 ist der Spantkopf 42 symmetrisch angeordnet.

In Fig. 13 ist im Querschnitt ein Ausschnitt vom Schalenbauteil 40 gezeigt. Ersichtlich ist mit Blick in Richtung Spantsteg 41 die Schweißverbindung 43 zwischen Rumpfhaut 2 mit Schweißzusatzsockel 5 und Spantsteg 41, vorzugsweise eine Doppelkehlnaht-Schweißverbindung bzw. Doppel-HV-Naht. Der Spantgurt 41 ist mit einer I-Naht auf dem Spantsteg 24 verschweißt. Der Spantkopf 42, der symmetrisch auf dem Spantgurt 24 angeordnet ist, ist mittels einer Doppelkehlnaht bzw. Doppel-HV-Naht 44 auf dem Spantgurt 24 verschweißt (vergleiche Detail Z).

## Patentansprüche

1. Schalenbauteil (1) für ein Flugzeug, bestehend aus mindestens einem Hautblech (2), mehrere in Flugzeuglängsrichtung verlaufende Stringer (3) und quer zur Flugzeuglängsrichtung verlaufende Spante (4, 4'), wobei das Hautfeld (2) im Bereich der Anschlußstellen zu den Stringern mit einem Schweißzusatzwerkstoff (5) versehen ist und die Stringer (3) auf das Hautblech (2) in diesem Bereich (5) angeschweißt sind,
**dadurch gekennzeichnet, daß** das Hautfeld (2) im Bereich der Anschlußstellen zu den Spanten (4, 4') mit einem Schweißzusatzwerkstoff (5) versehen ist, die Spante (4, 4') aus Spantfuß (11) und Spantprofil (10) bestehen, wobei der Spantfuß (11) Ausschnitte (12) für den Stringerdurchgang aufweist und zwischen den Ausschnitten (12) eine Schweißverbindung vom Spantfuß (11) zum Hautblech (2) besteht und das Spantprofil (10) mit dem jeweiligen Spantfuß (11) verbunden ist.

2. Schalenbauteil nach Anspruch 1,
**dadurch gekennzeichnet, daß**
der Schweißzusatzwerkstoff in Form eines Schweißzusatzsockels (5) auf dem Hautblech (2) angeordnet ist.

3. Schalenbauteil nach einem der Ansprüche 1 oder 2,
**dadurch gekennzeichnet, daß**
der Spantausschnitt (12) geometrisch so gestaltet ist, daß der durch den Ausschnitt (12) hindurchgeführte Stringer (7) eine Anschlußfläche zu einer Seitenwand des Ausschnittes (12) aufweist und eine Schweißverbindung (13) zwischen Stringersteg (7) und Spantfuß (11) vorgesehen ist.

4. Schalenbauteil nach einem der Ansprüche 1 oder 2,
**dadurch gekennzeichnet, daß**
der Spantausschnitt (12) geometrisch so gestaltet ist, daß der durch den Ausschnitt (12) hindurchgeführte Stringer (7) berührungslos zum Spantfuß (11) ist.

5. Schalenbauteil nach einem der Ansprüche 1 bis 4,
**dadurch gekennzeichnet, daß**
die Stringer (3) aus einem Strangpreßhalbzeug mit Hammerkopfprofil hergestellt sind.

6. Verfahren zur Herstellung eines Schalenbauteils nach einem der Ansprüche 1 bis 5,
mit folgenden Schritten:
- das Hautblech (2) wird an den Anschlußstellen von den Stringern (3) und den Spanten (4, 4') mit Schweißzusatzwerkstoff versehen,
- die Stringerstege (3) werden an das Hautblech (2) geschweißt,
- der Spantfuß (11) wird mit dem stringerverstärkten Hautblech (2) verschweißt,
- das Spantprofil (10) wird an den Spantfuß (11) geschweißt.

7. Verfahren nach Anspruch 6
**dadurch gekennzeichnet, daß**
der Schweißzusatzwerkstoff auf das Hautblech (2) plattiert wird und bis auf ein Gitter (5A) mit Schweißzusatzwerkstoff der Schweißzusatzwerkstoff chemisch abgetragen wird.

8. Verfahren nach einem der Ansprüche 6 oder 7
**dadurch gekennzeichnet, daß**
mindestens ein Teil des Schweißzusatzwerkstoffes als Draht mittels einer Drahtzuführvorrichtung dem Hautblech (2) im Bereich der Schweißstellen zugeführt wird.

9. Verfahren nach einem der Ansprüche 6 bis 8
**dadurch gekennzeichnet, daß**
das Hautblech (2) zum Erreichen der sphärisch gekrümmten Fläche in Spant- und/oder Stringerrichtung tiefgezogen wird.

10. Verfahren nach einem der Ansprüche 6 bis 9
**dadurch gekennzeichnet, daß**
an der jeweiligen Anschlußfläche vom Ausschnitt (12) des Spantfußes (11) und Stringersteg (7) eine Schweißverbindung (13) gefügt wird.

11. Schalenbauteil (20) für ein Flugzeug, bestehend aus mindestens einem Hautblech (2), mehrere in Flugzeuglängsrichtung verlaufende Stringer (3) und quer zur Flugzeuglängsrichtung verlaufende Spante, wobei das Hautfeld (2) im Bereich der Anschlußstellen zu den Stringern mit einem Schweißzusatzwerkstoff (5) versehen ist und die Stringer (3) auf das Hautblech (2) in diesem Bereich (5) angeschweißt sind,
**dadurch gekennzeichnet, daß** das Hautfeld (2) im Bereich der Anschlußstellen zu den Spanten mit einem Schweißzusatzwerkstoff versehen ist, die Stringer (3) als Stringerstege (21) ausgebildet sind, ein Stringer-Spant-Gitter (22) bestehend aus Stringergurte (23) und Spantgurte (24) vorgesehen ist, wobei die Stringergurte (23) an den Stringerstegen (21) mittels einer Schweißverbindung (32) angebracht sind und die Spante jeweils aus einem einteiligen Spantelement (25, 25') gebildet sind, wobei das Spantelement (25, 25') aus einem Spantsteg (34) und einem mit Durchbrüchen (37) versehenem Fußteil (33) besteht und mit dem Fußteil (33) am Hautblech (2) und mit dem Spantsteg (34) an der Stirnseite des Spantgurtes (24) angeordnet ist.

12. Schalenbauteil nach Anspruch 11,
**dadurch gekennzeichnet, daß**
der Schweißzusatzwerkstoff in Form eines Schweißzusatzsockels (5) auf dem Hautblech (2) angeordnet ist.

13. Schalenbauteil nach einem der Ansprüche 11 oder 12,
**dadurch gekennzeichnet, daß**
die Durchbrüche (37, 37') im Fußteil (33) geometrisch so gestaltet sind, daß der durch einen Durchbruch (37) hindurchgeführte Stringersteg (21) berührungslos zum Fußteil (33) ist.

14. Schalenbauteil nach einem der Ansprüche 11 bis 13,
**dadurch gekennzeichnet, daß**
das Hautblech (2) in Spant- und/oder Stringerrichtung sphärisch gekrümmt ist.

15. Schalenbauteil nach einem der Ansprüche 11 bis 14,
**dadurch gekennzeichnet, daß**
das Stringer-Spant-Gitter (22) im Anschlußbereich an die Stringerstege (21) und an die Spantstege (34) mit Schweißzusatzwerkstoff versehen ist.

16. Schalenbauteil nach einem der Ansprüche 11 bis 15,
**dadurch gekennzeichnet, daß**
das Stringer-Spant-Gitter (22) entsprechend der Krümmung des Hautbleches (2) in Spant- und/oder Stringerrichtung sphärisch gekrümmt ist.

17. Schalenbauteil nach einem der Ansprüche 11 bis 16,
**dadurch gekennzeichnet, daß**
die Schweißverbindung (32) zwischen Stringersteg (21) und Stringergurt (23) des Stringer-Spant-Gitters (22) eine I-Naht ist.

18. Schalenbauteil nach einem der Ansprüche 11 bis 17,
**dadurch gekennzeichnet, daß**
das Spantelement (25) mit seinem Fußteil (33) an der Rumpfhaut (2) mittels einer Doppelkehlnaht bzw. DHV-Naht (35) verschweißt ist.

19. Schalenbauteil nach einem der Ansprüche 11 bis 18,
**dadurch gekennzeichnet, daß**
das Spantelement (25) mit seinem Spantsteg (34) an der Stirnseite des Spantgurtes (24) mittels einer HV-Naht (36) verschweißt ist.

20. Schalenbauteil nach einem der Ansprüche 11 bis 19,
**dadurch gekennzeichnet, daß**
das Spantelement (25) am Spantsteg (34) mit einem Versteifungsgurt (38) versehen ist.

21. Verfahren zur Herstellung eines Schalenbauteils nach einem der Ansprüche 11 bis 20,
mit folgenden Schritten:
- das Hautblech (2) wird an den Anschlußstellen von den Stringerstegen (21) und den Spantelementen (25, 25') mit Schweißzusatzwerkstoff versehen,
- die Stringerstege (21) werden an das Hautblech (2) geschweißt,
- der Stringergurt (23) des Stringer-Spant-Gitters (22) wird am Stringersteg (21) mittels einer I-Naht (32) geschweißt,
- das Spantelement (25) wird mit seinem Fußteil (33) am Hautblech (2) mittels einer Schweißnaht (35), vorzugsweise eine Doppelkehlnaht, gefügt und
- das Spantelement (25) wird mit seinem Spantsteg (34) an der Stirnseite des Spantgurtes (24) mittels einer Schweißnaht (36), vorzugsweise eine HV-Naht, gefügt.

22. Verfahren nach Anspruch 21
**dadurch gekennzeichnet, daß**
der Schweißzusatzwerkstoff auf das Hautblech (2) plattiert wird und bis auf ein Gitter (5A) mit Schweißzusatzwerkstoff der Schweißzusatzwerkstoff chemisch abgetragen wird.

23. Verfahren nach einem der Ansprüche 21 oder 22
**dadurch gekennzeichnet, daß**
mindestens ein Teil des Schweißzusatzwerkstoffes als Draht mittels einer Drahtzuführvorrichtung dem Hautblech (2) im Bereich der Schweißstellen zugeführt wird.

24. Verfahren nach einem der Ansprüche 21 bis 23
**dadurch gekennzeichnet, daß**
das Hautblech (2) zum Erreichen der sphärisch gekrümmten Fläche in Spant- und/oder Stringerrichtung tiefgezogen wird.

25. Verfahren nach einem der Ansprüche 21 bis 24
**dadurch gekennzeichnet, daß**
das Stringer-Spant-Gitter (22) zum Erreichen der sphärisch gekrümmten Fläche in Spant- und/oder Stringerrichtung tiefgezogen wird.

26. Schalenbauteil (40) für ein Flugzeug, bestehend aus mindestens einem Hautblech (2), mehrere in Flugzeuglängsrichtung verlaufende Stringer und quer zur Flugzeuglängsrichtung verlaufende Spante, wobei das Hautfeld (2) im Bereich der Anschlußstellen zu den Stringern mit einem Schweißzusatzwerkstoff versehen ist und die Stringer auf das Hautblech (2) in diesem Bereich angeschweißt sind,
**dadurch gekennzeichnet, daß** das Hautfeld (2) im Bereich der Anschlußstellen zu den Spanten mit einem Schweißzusatzwerkstoff versehen ist, die Stringer als Stringerstege (21) ausgebildet sind und die Spante einen Spantsteg (41) und einen Spantkopf (42) aufweisen, die Stringerstege (21) und Spantstege (41) im Bereich des mit Schweißzusatzwerkstoff versehenen Gitters (5A) am Hautblech (2) aufgeschweißt sind, ein Stringer-Spant-Gitter (22) bestehend aus Stringergurte (23) und Spantgurte (24) vorgesehen ist, wobei die Stringergurte (23) an den Stringerstegen (21) und die Spantgurte (24) an den Spantstegen (41) mittels einer Schweißverbindung (32) angebracht sind und der jeweilige Spantkopf (42) auf dem jeweiligen Spantgurt (24) mittels einer Schweißverbindung (44) angeordnet ist.

27. Schalenbauteil nach Anspruch 26,
**dadurch gekennzeichnet, daß**
der Schweißzusatzwerkstoff in Form eines Schweißzusatzsockels (5) auf dem Hautblech (2) angeordnet ist.

28. Schalenbauteil nach einem der Ansprüche 26 oder 27,
**dadurch gekennzeichnet, daß**
die Schweißverbindung (32) zwischen Stringergurt (23) und Stringersteg (21) sowie zwischen Spantgurt (24) und Spantsteg (41) eine I-Naht ist.

29. Schalenbauteil nach einem der Ansprüche 26 bis 28,
**dadurch gekennzeichnet, daß**
der Spantkopf (42) symmetrisch auf dem Spantgurt (24) angeordnet ist.

30. Schalenbauteil nach einem der Ansprüche 26 bis 29,
**dadurch gekennzeichnet, daß**
der Spantkopf (42) mit dem Spantgurt (24) mittels einer Doppelkehlnaht oder DHV-Naht (44) verbunden ist.

31. Verfahren zur Herstellung eines Schalenbauteils nach einem der Ansprüche 26 bis 30,
mit folgenden Schritten:
- das Hautblech (2) wird an den Anschlußstellen von den Stringerstegen (21) und den Spantelementen (25, 25') mit Schweißzusatzwerkstoff versehen,
- die Stringerstege (21) und die Spantstege (34) werden im Bereich des Schweißzusatzwerkstoffes an das Hautblech (2) geschweißt, wobei Stringerstege (21) und Spantstege (34) ein Steggitter (45) bilden,
- der Stringergurt (23) und der Spantgurt (24) des Stringer-Spant-Gitters (22) werden am Stringersteg (21) bzw. Spantsteg (41) mittels einer I-Naht (32) geschweißt,
- der Spantkopf (42) wird am jeweiligen Spantgurt (24) mit einer Schweißverbindung (44), vorzugsweise eine Doppelkehlnaht, angeschweißt.

32. Verfahren nach Anspruch 31
**dadurch gekennzeichnet, daß**
der Schweißzusatzwerkstoff auf das Hautblech (2) plattiert wird und bis auf ein Gitter (5A) mit Schweißzusatzwerkstoff der Schweißzusatzwerkstoff chemisch abgetragen wird.

33. Verfahren nach einem der Ansprüche 31 oder 32
**dadurch gekennzeichnet, daß**
mindestens ein Teil des Schweißzusatzwerkstoffes als Draht mittels einer Drahtzuführvorrichtung dem Hautblech (2) im Bereich der Schweißstellen zugeführt wird.

34. Verfahren nach einem der Ansprüche 31 bis 33
**dadurch gekennzeichnet, daß**
das Hautblech (2) zum Erreichen der sphärisch gekrümmten Fläche in Spant- und/oder Stringerrichtung tiefgezogen wird.

35. Verfahren nach einem der Ansprüche 31 bis 34
**dadurch gekennzeichnet, daß**
das Stringer-Spant-Gitter (22) zum Erreichen der sphärisch gekrümmten Fläche in Spant- und/oder Stringerrichtung tiefgezogen wird.

36. Verfahren nach einem der Ansprüche 1 bis 35
**dadurch gekennzeichnet, daß**
als Schweißverfahren das CO₂-Laserschweißen verwendet wird.

37. Verfahren nach einem der Ansprüche 1 bis 35
**dadurch gekennzeichnet, daß**
als Schweißverfahren Festkörper-Laserschweißen verwendet wird.

38. Schalenbauteil nach einem der vorangegangenen Ansprüche,
**dadurch gekennzeichnet, daß**
das Hautblech (2) aus einem schweißgeeigneten Strukturwerkstoff besteht.

## Claims

1. Stressed-skin component (1) for an aircraft, consisting of at least one skinplate (2), a number of stringers (3) extending in the longitudinal direction of the aircraft and of ribs (4, 4') extending transversely to said longitudinal direction of the aircraft, wherein the skin panel (2) is provided with a welding filler material (5) in the region of the points of connection to the stringers and said stringers (3) are welded onto the skinplate (2) in this region (5),
**characterised in that** the skin panel (2) is provided with a welding filler material (5) in the region of the points of connection to the ribs (4, 4'), said ribs (4, 4') consist of a rib base (11) and a rib profile (10), said rib base (11) having cutouts (12) for the passage of the stringers and there being a welded connection of the rib base (11) to the skinplate (2) between said cutouts (12), and the rib profile (10) is connected to the particular rib base (11).

2. Stressed-skin component according to claim 1,
**characterised in that**
the welding filler material is disposed on the skinplate (2) in the form of a welding filler pedestal (5).

3. Stressed-skin component according to one of claims 1 or 2,
**characterised in that**
the cutout (12) in the rib is so shaped, geometrically, that the stringer (7) which passes through said cutout (12) has a face connecting it to a side wall of said cutout (12) and a welded connection (13) is provided between the stringer web (7) and the rib base (11).

4. Stressed-skin component according to one of claims 1 or 2,
**characterised in that**
the cutout (12) in the rib is so shaped, geometrically, that the stringer (7) which passes through said cutout (12) has no contact with the rib base (11).

5. Stressed-skin component according to one of claims 1 to 4,
**characterised in that**
the stringers (3) are manufactured from a semifinished extruded product with a hammer-head profile.

6. Method of manufacturing a stressed-skin component according to one of claims 1 to 5,
comprising the following steps:
- the skinplate (2) is provided with welding filler material at the points of connection of the stringers (3) and the ribs (4, 4');
- the stringer webs (3) are welded to the skinplate (2) ;
- the rib base (11) is welded together with the stringer-reinforced skinplate (2); and
- the rib profile (10) is welded to the rib base (11).

7. Method according to claim 6,
**characterised in that**
the welding filler material is plated onto the skinplate (2) and is removed chemically, apart from a grid (5A) having welding filler material.

8. Method according to one of claims 6 or 7,
**characterised in that**
at least part of the welding filler material is fed, in the form of wire, to the skinplate (2) in the region of the welding points by means of a wire-feeding device.

9. Method according to one of claims 6 to 8,
**characterised in that**
the skinplate (2) is deep-drawn for the purpose of achieving the spherically curved face in the direction of the ribs and/or stringers.

10. Method according to one of claims 6 to 9,
**characterised in that** a welded connection (13) is joined to the particular connecting face of the cutout (12) of the rib base (11) and the stringer web (7).

11. Stressed-skin component (20) for an aircraft, consisting of at least one skinplate (2), a number of stringers (3) extending in the longitudinal direction of the aircraft and of ribs extending transversely to said longitudinal direction of the aircraft, wherein the skin panel (2) is provided with a welding filler material (5) in the region of the points of connection to the stringers and said stringers (3) are welded onto the skinplate (2) in this region (5),
**characterised in that** the skin panel (2) is provided with a welding filler material (5) in the region of the points of connection to the ribs, the stringers (3) are constructed as stringer webs (21), a stringer/rib grid (22) consisting of stringer flanges (23) and rib flanges (24) is provided, the stringer flanges (23) being attached to the stringer webs (21) by means of a welded connection (32) and the ribs each being formed from a one-piece rib element (25, 25'), said rib element (25, 25') consisting of a rib web (34) and of a base part (33) provided with openings (37), and being disposed, by the base part (33), on the skinplate (2) and, with the rib web (34), on the end face of the rib flange (24).

12. Stressed-skin component according to claim 11,
**characterised in that**
the welding filler material is disposed on the skinplate (2) in the form of a welding filler pedestal (5).

13. Stressed-skin component according to one of claims 11 or 12,
**characterised in that**
the openings (37, 37') in the base part (33) are so shaped, geometrically, that the stringer web (21) which passes through an opening (37) is devoid of contact with said base part (33).

14. Stressed-skin component according to one of claims 11 to 13,
**characterised in that**
the skinplate (2) is spherically curved in the direction of the ribs and/or stringers.

15. Stressed-skin component according to one of claims 11 to 14,
**characterised in that**
the stringer/rib grid (22) is provided with welding filler material in the region of connection to the stringer webs (21) and to the rib webs (34).

16. Stressed-skin component according to one of claims 11 to 15,
**characterised in that**
the stringer/rib grid (22) is spherically curved in the direction of the ribs and/or stringers in a manner corresponding to the curvature of the skinplate (2).

17. Stressed-skin component according to one of claims 11 to 16,
**characterised in that**
the welded connection (32) between the stringer web (21) and the stringer flange of the stringer/rib grid (22) is an I-seam.

18. Stressed-skin component according to one of claims 11 to 17,
**characterised in that**
the rib element (25) is welded together with the fuselage skin (2) by its base part (33) by means of a double-fillet seam or DH-process seam.

19. Stressed-skin component according to one of claims 11 to 18,
**characterised in that**
the rib element (25) is welded together with the end face of the rib flange (24) by its rib web (34) by means of a high-strength seam (36).

20. Stressed-skin component according to one of claims 11 to 19,
**characterised in that**
the rib element (25) is provided with a stiffening flange (38) on the rib web (34).

21. Method of manufacturing a stressed-skin component according to one of claims 11 to 20,
comprising the following steps:
- the skinplate (2) is provided with welding filler material at the points of connection of the stringer webs (21) and the rib elements (25, 25');
- the stringer webs (21) are welded to the skinplate (2);
- the stringer flange (23) of the stringer/rib grid (22) is welded to the stringer web (21) by means of an I-seam (32);
- the rib element (25) is joined, by its base part (33), to the skinplate (2) by means of a weld seam (35), preferably a double-fillet seam; and
- the rib element (25) is joined, by its rib web (34), to the end face of the rib flange (24) by means of a weld seam (36), preferably a high-strength seam.

22. Method according to claim 21,
**characterised in that**
the welding filler material is plated onto the skinplate (2) and is removed chemically, apart from a grid (5A) having welding filler material.

23. Method according to one of claims 21 or 22,
**characterised in that**
at least part of the welding filler material is fed, in the form of wire, to the skinplate (2) in the region of the welding points by means of a wire-feeding device.

24. Method according to one of claims 21 to 23,
**characterised in that**
the skinplate (2) is deep-drawn for the purpose of achieving the spherically curved face in the direction of the ribs and/or stringers.

25. Method according to one of claims 21 to 24,
**characterised in that**
the stringer/rib grid (22) is deep-drawn for the purpose of achieving the spherically curved face in the direction of the ribs and/or stringers.

26. Stressed-skin component (20) for an aircraft, consisting of at least one skinplate (2), a number of stringers extending in the longitudinal direction of the aircraft and of ribs extending transversely to said longitudinal direction of the aircraft, wherein the skin panel (2) is provided with a welding filler material in the region of the points of connection to the stringers and said stringers are welded onto the skinplate (2) in this region,
**characterised in that** the skin panel (2) is provided with a welding filler material in the region of the points of connection to the ribs, the stringers are constructed as stringer webs (21) and the ribs have a rib web (41) and a rib head (42), the stringer webs (21) and rib webs (41) are welded onto the skinplate (2) in the region of the grid (5A) which is provided with welding filler material, a stringer/rib grid (22) consisting of stringer flanges (23) and rib flanges (24) is provided, the stringer flanges (23) being attached to the stringer webs (21), and the rib flanges (24) to the rib webs (41), by means of a welded connection (32) and the particular rib head (42) being disposed on the particular rib flange (24) by means of a welded connection (44).

27. Stressed-skin component according to claim 26,
**characterised in that**
the welding filler material is disposed on the skinplate (2) in the form of a welding filler pedestal (5).

28. Stressed-skin component according to one of claims 26 or 27,
**characterised in that**
the welded connection (32) between the stringer flange (23) and the stringer web (21) and also between the rib flange (24) and the rib web (41) is an I-seam.

29. Stressed-skin component according to one of claims 26 to 28,
**characterised in that**
the rib head (42) is disposed symmetrically on the rib flange (24).

30. Stressed-skin component according to one of claims 26 to 29,
**characterised in that**
the rib head (42) is connected to the rib flange (24) by means of a double-fillet seam or DH-process seam (44).

31. Method of manufacturing a stressed-skin component according to one of claims 26 to 30,
comprising the following steps:
- the skinplate (2) is provided with welding filler material at the points of connection of the stringer webs (21) and the rib elements (25, 25');
- the stringer webs (21) and the rib webs (34) are welded to the skinplate (2) in the region of the welding filler material, said stringer webs (21) and rib webs (34) forming a grid (45) of webs;
- the stringer flange (23) and the rib flange (24) of the stringer/rib grid (22) are welded to the stringer web (21) and rib web (41) respectively by means of an I-seam (32);
- the rib head (42) is welded onto the particular rib flange (24) by a welded connection (44), preferably a double-fillet seam.

32. Method according to claim 31,
**characterised in that**
the welding filler material is plated onto the skinplate (2) and is removed chemically, apart from a grid (5A) having welding filler material.

33. Method according to one of claims 31 or 32,
**characterised in that**
at least part of the welding filler material is fed, in the form of wire, to the skinplate (2) in the region of the welding points by means of a wire-feeding device.

34. Method according to one of claims 31 to 33,
**characterised in that**
the skinplate (2) is deep-drawn for the purpose of achieving the spherically curved face in the direction of the ribs and/or stringers.

35. Method according to one of claims 31 to 34,
**characterised in that**
the stringer/rib grid (22) is deep-drawn for the purpose of achieving the spherically curved face in the direction of the ribs and/or stringers.

36. Method according to one of claims 1 to 35,
**characterised in that**
CO₂ laser welding is used as the welding process.

37. Method according to one of claims 1 to 35,
**characterised in that**
solid-state laser welding is used as the welding process.

38. Stressed-skin component according to one of the preceding claims,
**characterised in that**
the skinplate (2) consists of a structural material which is suitable for welding.

## Revendications

1. Elément de coque (1) pour un avion, constitué par au moins une tôle d'habillage (2), plusieurs lisses (3) s'étendant dans la direction longitudinale de l'avion et des couples (4, 4') s'étendant transversalement à la direction longitudinale de l'avion, la plaque d'habillage (2) étant pourvue d'un matériau d'apport de soudage (5) dans la région des points de liaison avec les lisses, et les lisses (3) étant soudées à la tôle d'habillage (2) dans cette région (5), **caractérisé par le fait que** la plaque d'habillage (2) est pourvue d'un matériau d'apport de soudage (5) dans la région des points de liaison avec les couples (4, 4'), que les couples (4, 4') sont formés d'une base de couple (11) et un profilé de couple (10), la base de couple (11) présentant des découpes (12) pour le passage des lisses, et une liaison soudée existant entre la base de couple (11) et la tôle d'habillage (2), entre les découpes (12), et le profilé de couple (10) étant lié à la base de couple (11) respective.

2. Elément de coque selon la revendication 1, **caractérisé par le fait que** le matériau d'apport de soudage est disposé sous forme de socle d'apport de soudage (5) sur la tôle d'habillage (2).

3. Elément de coque selon une des revendications 1 ou 2, **caractérisé par le fait que** la découpe de couple (12) est configurée sur le plan géométrique de manière telle que la lisse (7) passant dans cette découpe (12) présente une surface de liaison avec une paroi latérale de la découpe (12), et qu'il est prévu une liaison soudée (13) entre la cloison de lisse (7) et la base de lisse (11).

4. Elément de coque selon une des revendications 1 ou 2, **caractérisé par le fait que** la découpe de couple (12) est configurée sur le plan géométrique de manière telle que la lisse (7) passant dans cette découpe (12) n'entre pas en contact avec la base de couple (11).

5. Elément de coque selon une des revendications 1 à 4, **caractérisé par le fait que** les lisses (3) sont réalisées à partir d'un produit extrudé semi-fini à profil à tête de marteau.

6. Procédé de fabrication d'un élément de coque selon une des revendications 1 à 5, comprenant les étapes suivantes:
- la tôle d'habillage (2) est pourvue d'un matériau d'apport de soudage au niveau des points de liaison des lisses (3) et des couples (4, 4'),
- les cloisons de lisses (3) sont soudées à la tôle d'habillage (2),
- la base de couple (11) est soudée à la tôle d'habillage (2) renforcée par les lisses,
- le profilé de couple (10) est soudé à la base de couple (11).

7. Procédé selon la revendication 6, **caractérisé par le fait que** le matériau d'apport de soudage est plaqué sur la tôle d'habillage (2) et qu'il est enlevé par voie chimique en laissant subsister une grille (5A) avec du matériau d'apport de soudage.

8. Procédé selon une des revendications 6 ou 7, **caractérisé par le fait qu'**au moins une partie du matériau d'apport de soudage est amenée sous forme de fil métallique, à l'aide d'un dispositif d'alimentation en fil, à la tôle d'habillage (2), dans la région des points de soudage.

9. Procédé selon une des revendications 6 à 8, **caractérisé par le fait que** pour obtenir la surface à courbure sphérique, la tôle d'habillage (2) est emboutie dans le sens des couples et/ou des lisses.

10. Procédé selon une des revendications 6 à 9, **caractérisé par le fait qu'**une liaison soudée (13) est réalisée au niveau de la surface de liaison concernée entre la découpe (12) de la base de couple (11) et la cloison de lisse (7).

11. Elément de coque (20) pour un avion, constitué par au moins une tôle d'habillage (2), plusieurs lisses (3) s'étendant dans la direction longitudinale de l'avion et des couples s'étendant transversalement à la direction longitudinale de l'avion, la plaque d'habillage (2) étant pourvue d'un matériau d'apport de soudage (5) dans la région des points de liaison avec les lisses, et les lisses (3) étant soudées à la tôle d'habillage (2) dans cette région (5), **caractérisé par le fait que** la plaque d'habillage (2) est pourvue d'un matériau d'apport de soudage dans la région des points de liaison avec les couples, que les lisses (3) sont conformées en cloisons de lisses (21), qu'il est prévu une grille (22) de lisses et de couples, constituée de membrures de lisses (23) et de membrures de couples (24), les membrures de lisses (23) étant fixées aux cloisons de lisses (21) par une liaison soudée (32), et les couples étant formés chacun d'un couple (25, 25') monobloc, le couple (25, 25') étant constitué par une cloison de couple (34) et une partie de base (33) pourvue de passages (37) et étant disposé avec la partie de base (33) sur la tôle d'habillage (2) et avec la cloison de couple (34) sur la face frontale de la membrure de couple (24).

12. Elément de coque selon la revendication 11, **caractérisé par le fait que** le matériau d'apport de soudage est disposé sous forme de socle de matériau d'apport (5) sur la tôle d'habillage (2).

13. Elément de coque selon une des revendications 11 ou 12, **caractérisé par le fait que** les passages (37, 37') aménagés dans la partie de base (33) sont configurés sur le plan géométrique de manière telle que la cloison de lisse (21) traversant un passage (37) n'entre pas en contact avec la partie de base (33).

14. Elément de coque selon une des revendications 11 à 13, **caractérisé par le fait que** la tôle d'habillage (2) présente une courbure sphérique dans le sens des couples et/ou des lisses.

15. Elément de coque selon une des revendications 11 à 14, **caractérisé par le fait que** la grille (22) de lisses et de couples est pourvue d'un matériau d'apport de soudage dans la zone de liaison avec les cloisons de lisses (21) et avec les cloisons de couples (34).

16. Elément de coque selon une des revendications 11 à 15, **caractérisé par le fait que** la grille (22) de lisses et de couples présente une courbure sphérique qui correspond à la courbure de la tôle d'habillage (2) dans le sens des couples et/ou des lisses.

17. Elément de coque selon une des revendications 11 à 16, **caractérisé par le fait que** la liaison soudée (32) entre la cloison de lisse (21) et la membrure de lisse (23) de la grille (22) de lisses et de couples est une soudure en I.

18. Elément de coque selon une des revendications 11 à 17, **caractérisé par le fait que** le couple (25) est soudé avec sa partie de base (33) à l'habillage de fuselage (2) à l'aide d'une soudure en congé double ou d'une soudure double à haute résistance (35).

19. Elément de coque selon une des revendications 11 à 18, **caractérisé par le fait que** le couple (25) est soudé avec sa cloison de couple (34) à la face frontale de la membrure de couple (24), à l'aide d'une soudure à haute résistance (36).

20. Elément de coque selon une des revendications 11 à 19, **caractérisé par le fait que** le couple (25) est pourvu d'une membrure de renforcement (38) au niveau de sa cloison de couple (34).

21. Procédé de fabrication d'un élément de coque selon une des revendications 11 à 20, comprenant les étapes suivantes:
- la tôle d'habillage (2) est pourvue d'un matériau d'apport de soudage au niveau des points de liaison avec les cloisons de lisses (21) et les couples (25, 25'),
- les cloisons de lisses (21) sont soudées à la tôle d'habillage (2),
- la membrure de lisse (23) de la grille (22) de lisses et de couples est soudée à la cloison de lisse (21) à l'aide d'une soudure en 1 (32),
- le couple (25) est fixé avec sa partie de base (33) à la tôle d'habillage (2) à l'aide d'une soudure (35), de préférence une soudure en congé double, et
- le couple (25) est fixé avec sa cloison de couple (34) à la face frontale de la membrure de couple (24) à l'aide d'une soudure (36), de préférence une soudure à haute résistance.

22. Procédé selon la revendication 21, **caractérisé par le fait que** le matériau d'apport de soudage est plaqué sur la tôle d'habillage (2) et qu'il est enlevé par voie chimique en laissant subsister une grille (5A) avec du matériau d'apport de soudage.

23. Procédé selon une des revendications 21 ou 22, **caractérisé par le fait qu'**au moins une partie du matériau d'apport de soudage est amenée sous forme de fil métallique, à l'aide d'un dispositif d'alimentation en fil, à la tôle d'habillage (2), dans la région des points de soudage.

24. Procédé selon une des revendications 21 à 23, **caractérisé par le fait que** pour obtenir la surface à courbure sphérique, la tôle d'habillage (2) est emboutie dans le sens des couples et/ou des lisses.

25. Procédé selon une des revendications 21 à 24, **caractérisé par le fait que** pour obtenir la surface à courbure sphérique, la grille (22) de lisses et de couples est emboutie dans le sens des couples et/ou des lisses.

26. Elément de coque (40) pour un avion, constitué par au moins une tôle d'habillage (2), plusieurs lisses s'étendant dans la direction longitudinale de l'avion et des couples s'étendant transversalement à la direction longitudinale de l'avion, la plaque d'habillage (2) étant pourvue d'un matériau d'apport de soudage dans la région des points de liaison avec les lisses, et les lisses étant soudées à la tôle d'habillage (2) dans cette région, **caractérisé par le fait que** la plaque d'habillage (2) est pourvue d'un matériau d'apport de soudage dans la région des points de liaison avec les couples, que les lisses sont conformées en cloisons de lisses (21) et les couples présentent une cloison de couple (41) et une tête de couple (42), que les cloisons de lisses (21) et les cloisons de couples (41) sont soudées à la tôle d'habillage (2), dans la région de la grille (5A) pourvue de matériau d'apport de soudage, qu'il est prévu une grille (22) de lisses et de couples, constituée de membrures de lisses (23) et de membrures de couples (24), les membrures de lisses (23) étant fixées aux cloisons de lisses (21) et les membrures de couples (24) aux cloisons de couples (41) par une liaison soudée (32), et la tête de couple (42) respective étant disposée sur la membrure de couple (24) respective à l'aide d'une liaison soudée (44).

27. Elément de coque selon la revendication 26, **caractérisé par le fait que** le matériau d'apport de soudage est disposé sous forme de socle de matériau d'apport (5) sur la tôle d'habillage (2).

28. Elément de coque selon une des revendications 26 ou 27, **caractérisé par le fait que** la liaison soudée (32) entre la membrure de lisse (23) et la cloison de lisse (21) ainsi qu'entre la membrure de couple (24) et la cloison de couple (41) est une soudure en I.

29. Elément de coque selon une des revendications 26 à 28, **caractérisé par le fait que** la tête de couple (42) est disposée de façon symétrique sur la membrure de couple (24).

30. Elément de coque selon une des revendications 26 à 29, **caractérisé par le fait que** la tête de couple (42) est liée à la membrure de couple (24) à l'aide d'une soudure en congé double ou d'une soudure double à haute résistance (44).

31. Procédé de fabrication d'un élément de coque selon une des revendications 26 à 30, comprenant les étapes suivantes:
- la tôle d'habillage (2) est pourvue d'un matériau d'apport de soudage au niveau des points de liaison des cloisons de lisses (21) et des couples (25, 25'),
- les cloisons de lisses (21) et les cloisons de couples (34) sont soudées à la tôle d'habillage (2), dans la région du matériau d'apport de soudage, les cloisons de lisses (21) et les cloisons de couples (34) formant une grille de cloisons (45),
- la membrure de lisse (23) et la membrure de couple (24) de la grille (22) de lisses et de couples sont soudées respectivement à la cloison de lisse (21) et à la cloison de couple (41) à l'aide d'une soudure en 1 (32),
- la tête de couple (42) est soudée à la membrure de couple (24) concernée par une liaison soudée (44), de préférence une soudure en congé double.

32. Procédé selon la revendication 31, **caractérisé par le fait que** le matériau d'apport de soudage est plaqué sur la tôle d'habillage (2) et qu'il est enlevé par voie chimique en laissant subsister une grille (5A) avec du matériau d'apport de soudage.

33. Procédé selon une des revendications 31 ou 32, **caractérisé par le fait qu'**au moins une partie du matériau d'apport de soudage est amenée sous forme de fil métallique, à l'aide d'un dispositif d'alimentation en fil, à la tôle d'habillage (2), dans la région des points de soudage.

34. Procédé selon une des revendications 31 à 33, **caractérisé par le fait que** pour obtenir la surface à courbure sphérique, la tôle d'habillage (2) est emboutie dans le sens des couples et/ou des lisses.

35. Procédé selon une des revendications 31 à 34, **caractérisé par le fait que** pour obtenir la surface à courbure sphérique, la grille (22) de lisses et de couples est emboutie dans le sens des couples et/ou des lisses.

36. Procédé selon une des revendications 1 à 35, **caractérisé par le fait que** le procédé de soudage utilisé est le soudage au laser à CO₂.

37. Procédé selon une des revendications 1 à 35, **caractérisé par le fait que** le procédé de soudage utilisé est le soudage au laser à solide.

38. Elément de coque selon une des revendications précédentes, **caractérisé par le fait que** la tôle d'habillage (2) est réalisée à partir d'un matériau pour structures d'avions adapté au soudage.
